# EUROPEAN PATENT APPLICATION

(11) **EP 2 375 140 A1**
(43) Date of publication of application: **12.10.2011**
(21) Application number: 11153850.0
(22) Date of filing: 09.02.2011
(51) Int. Cl.: F21V 8/00

(54) **Display apparatus and backlight unit**

(30) Priority: 29.03.2010 KR 20100027862
(71) Applicant: SAMSUNG ELECTRONICS CO., LTD., Suwon-si Gyeonggi-do 442-742 (KR)
(72) Inventor: Jeong, Kyung-ock, Gyeonggi-do (KR)
(74) Representative: Robinson, Ian Michael

(57) **Abstract**

A display apparatus and a backlight unit for lighting the display apparatus are provided. The backlight unit includes a light guide plate, a plurality of light sources which project light onto a side surface of the light guide plate, and a light guide unit which is provided in each of at least two groups of light sources. The light guide unit is disposed toward the light guide plate in order to limit diffusion of a path of the light projected onto the side surface of the light guide plate. Accordingly, the light enters the light guide plate in a narrow path in a direction that is perpendicular to the side wall of the light guide plate, so that local dimming is achieved effectively.

## Description

### CROSS-REFERENCE TO RELATED APPLICATION

This application claims priority from Korean Patent Application No. 10-2010-0027862, filed on March 29, 2010, in the Korean Intellectual Property Office, the disclosure of which is incorporated herein by reference in its entirety.

### BACKGROUND

### 1. Field

Apparatuses and methods relate generally to a display apparatus and a backlight unit, and more particularly, to a display apparatus which increases directivity of light to provide effective backlight and a backlight unit thereof.

### 2. Description of the Related Art

With the development of multimedia apparatuses such as the television, mobile phone, and laptop computer, the demand for the development of technologies in the field of flat panel display devices relating to display apparatuses is growing. A representative flat panel display device may be a plasma display panel (PDP), a liquid crystal display (LCD), a field emission display (FED), and a vacuum fluorescent display (VFD).

Among these, the LCD is a display that converts various electrical information output from a variety of devices into visual information using a change in the transmissibility of a liquid crystal according to an applied voltage. The LCD then transmits the visual information. Recently, the LCD has become widely used due to the ease of mass production, usefulness as a driving means, and ability to create a high quality image.

However, the LCD is a transmissive-type display element and displays a desired image on a screen by adjusting an amount of light transmitted through a liquid crystal layer due to index of refraction anisotropy of a liquid crystal element. Therefore, the LCD display thus requires a backlight unit which functions as a light source for projecting light onto the liquid crystal layer in order to display an image.

Such a backlight unit has diverse configurations according to the type of light source and the purpose or size of an apparatus employing the backlight unit. In particular, how to arrange the light source is an important factor in providing an effective backlight, and the arranged light source can be controlled in various ways.

On the other hand, how to control a light source is very important in an edge-type backlight unit. In particular, in a backlight unit adopting a local dimming method for providing backlight by controlling a light source on a block-by-block basis, inter-block interference may occur, making it difficult to achieve local dimming.

### SUMMARY

According to the present invention there is provided an apparatus and method as set forth in the appended claims. Other features of the invention will be apparent from the dependent claims, and the description which follows.

One or more exemplary embodiments overcome the above disadvantages and other disadvantages not described above. However, it is understood that the exemplary embodiments are not required to overcome the disadvantages described above, and the exemplary embodiments may not overcome any of the problems described above.

An aspect of an exemplary embodiment provides a display apparatus and a backlight unit which are capable of effectively achieving local dimming of the display apparatus.

An aspect of another exemplary embodiment provides a backlight unit using a local dimming method, which reduces inter-block interference and increases directivity of light, and a display apparatus using the same.

According to an aspect of an exemplary embodiment, a display apparatus includes: a display panel, and a backlight unit which provides light to the display panel, wherein the backlight unit includes: a light guide plate, a plurality of light sources which project light onto a side surface of the light guide plate and which are arranged in a plurality of groups, and at least one light guide unit disposed on each of at least two groups of light sources, wherein the light guide unit is positioned to limit a path of the light projected onto the side surface of the light guide plate.

The light guide unit may be disposed toward the light guide plate such that the light projected onto the side surface of the light guide plate has increased directivity.

The light guide unit may be made of a transparent material.

The light guide unit may be formed in a spherical shape or aspheric shape.

The light guide unit may be formed in a rectangular shape such that the light guide unit encloses all of the light sources of the group upon which the light guide unit is disposed.

Each group may include at least two light sources.

The light source may be a light emitting diode (LED) light source.

The plurality of light sources may project light onto a left side surface and a right side surface of the light guide plate.

The plurality of light sources may project light onto an upper side surface and a lower side surface of the light guide plate.

The display apparatus may further include a driving unit which controls which of the plurality of light sources are turned on or off, and which controls the light sources to be turned on or off by group.

According to an aspect of another exemplary embodiment, a backlight unit includes: a light guide plate, a plurality of light sources which project light onto a side surface of the light guide plate, and a light guide unit disposed on at least one of the plurality of light sources, wherein the light guide unit increases the directivity of the light projected onto the side surface of the light guide plate.

The light guide unit is positioned relative to the light guide plate such that the light projected onto the side surface of the light guide plate has increased directivity.

The light guide unit may be made of a transparent material.

The light guide unit may be formed in a spherical shape or an aspheric shape.

The light guide unit may be formed in a rectangular shape such that the light guide unit encloses all of the light sources upon which the light guide unit is disposed.

The light sources may be organized into groups of at least two light sources in each group.

The light source may be an LED light source.

The plurality of light sources may project light onto a left side surface and a right side surface of the light guide plate.

The plurality of light sources may project light onto an upper side surface and a lower side surface of the light guide plate.

The backlight unit may further include a driving unit which controls which of the plurality of light sources are turned on or off, and which controls one or more groups of light sources to be turned on or off.

Additional aspects and advantages of the present inventive concept will be set forth in the detailed description, will be apparent from the detailed description, or may be learned by practicing the exemplary embodiments.

### BRIEF DESCRIPTION OF THE DRAWINGS

The above and/or other aspects will be more apparent by describing in detail the exemplary embodiments, with reference to the accompanying drawings in which:

FIG. 1 is a block diagram of a display apparatus according to an exemplary embodiment;

FIG. 2 is a block diagram of a video output unit according to an exemplary embodiment;

FIG. 3A is an illustration of a backlight unit with light guide units, which illustrates a backlight providing method, according to an exemplary embodiment;

FIG. 3B is a related art illustration of a backlight unit without light guide units, which illustrates a related art backlight providing method;

FIG. 4A is an illustration of a backlight unit with light guide units, which illustrates the backlight providing method according to an exemplary embodiment;

FIG. 4B is a related art illustration of a backlight unit without light guide units, which illustrates a related art backlight providing method;

FIGS. 5A and 5B are views of a backlight unit illustrating arrangement of light sources according to an exemplary embodiment; and

FIGS. 6A and 6B are views of a backlight unit illustrating the backlight providing method according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it will be apparent that the exemplary embodiments can be carried out without those specifically defined matters. Also, functions or elements known in the related art are not described in detail since they would obscure the invention with unnecessary detail.

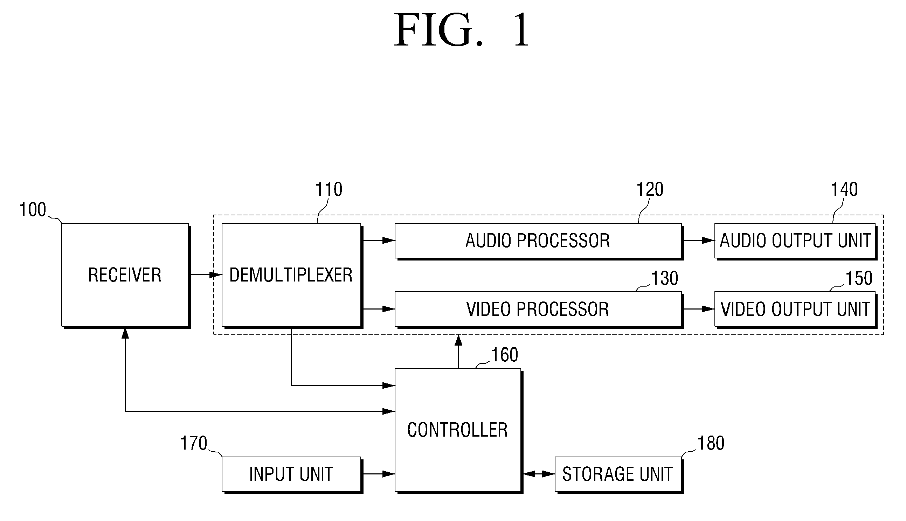

FIG. 1 is a block diagram illustrating a display apparatus according to an exemplary embodiment. The display apparatus according to an exemplary embodiment includes a receiver 100, a demultiplexer 110, an audio processor 120, a video processor 130, an audio output unit 140, a video output unit 150, a controller 160, an input unit 170, and a storage unit 180.

The receiver 100 receives a broadcast in a wireless or wired manner and transmits the broadcast to the demultiplexer 110. More specifically, the receiver 100 transmits a broadcast which is received from a broadcast provider in a wireless manner, or a broadcast which is received in a wired manner, such as that from a digital versatile disk (DVD) or a set-top box, to the demultiplexer 110.

The demultiplexer 110 divides a broadcast signal output from the receiver 100 into a video signal and an audio signal and outputs the video signal and the audio signal to the video processor 130 and the audio processor 120, respectively.

The audio processor 120 decodes the audio signal divided by the demultiplexer 110 to convert it into an audio signal of a format that can be output through the audio output unit 140, and provides the converted audio signal to the audio output unit 140. The video processor 130 decodes the video signal divided by the demultiplexer 110 to convert it into a video signal of a format that can be output through the video output unit 150, and provides the converted video signal to the video output unit 150.

The audio output unit 140 outputs the audio signal output from the audio processor 120, and the video output unit 150 outputs the video signal output from the video processor 130.

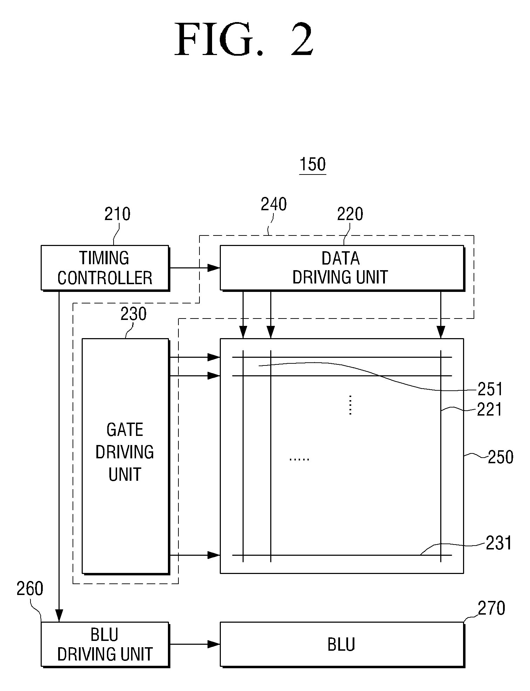

The video output unit 150 includes a display panel (not shown) and a backlight unit (not shown), and the display panel receives backlight from the backlight unit and outputs the video signal output from the video processor 130 to a user. The video output unit 150 will be explained in detail below with reference to FIG. 2.

The controller 160 controls the receiver 100 to receive the broadcast and controls the demultiplexer 110 to divide and decode the broadcast, and also controls the overall operation of the audio processor 120, the audio output unit 140, the video processor 130, the video output unit 150, and the storage unit 180.

The storage unit 180 stores the received broadcast or stores various data necessary for controlling the display apparatus, and provides the data to the controller 160.

FIG. 2 is a block diagram illustrating the video output unit 150 according to an exemplary embodiment. The video output unit 150 includes a timing controller 210, a driving unit 240, a display panel 250, a backlight unit (BLU) driving unit 260, and a BLU 270.

The display panel 250 includes a plurality of gate lines 231, a plurality of data lines 221, and a plurality of pixels 251 located in areas where the lines intersect.

The data line 221 receives a data voltage which has been changed from grayscale data from a data driving unit 220 and applies the data voltage to the pixel 251. The gate line 231 receives a gate on voltage and applies the gate on voltage to the pixel 251. The pixel 251 is formed at the area where the gate line 231 for applying the gate on voltage and the data line 221 for applying the data voltage intersect.

The timing controller 210 transmits a current frame of video to the data driving unit 220 in order to drive the display panel 250 as described above.

The timing controller 210 receives a video signal from an external source and performs data processing with respect to the video signal. More specifically, the timing controller 210 receives red, green, blue (RGB) data, a data-enabled signal indicating a point of time of the frame, a sync signal, and a clock signal. The timing controller then generates a control signal such as a gate start pulse (GSP) signal or a source start pulse (SSP) signal. The GSP signal is a signal indicating a point of time at which data is applied to the first gate line among vertical sync signals (Vsync), and the SSP signal is a signal indicating a point of time at which data is applied to the first source line among horizontal sync signals (Hsync).

That is, the driving unit 240 including the data driving unit 220 and a gate driving unit 230 controls a timing for selecting a point of time at which data is applied to the display panel 250.

The GSP or/and SSP signal output from the timing controller 210 is a signal for determining whether to provide backlight to the display panel 250 and for determining a timing of providing the backlight. That is, the BLU driving unit 260 controls an operation of the BLU 270 based on the signal output from the timing controller 210, thereby providing backlight to the display panel 250.

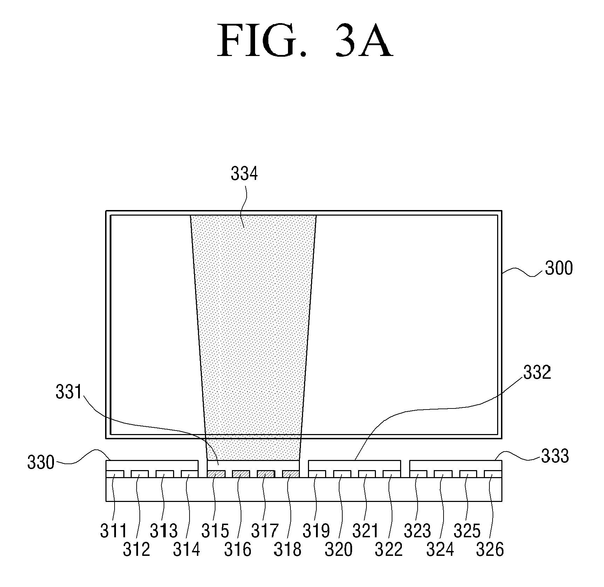

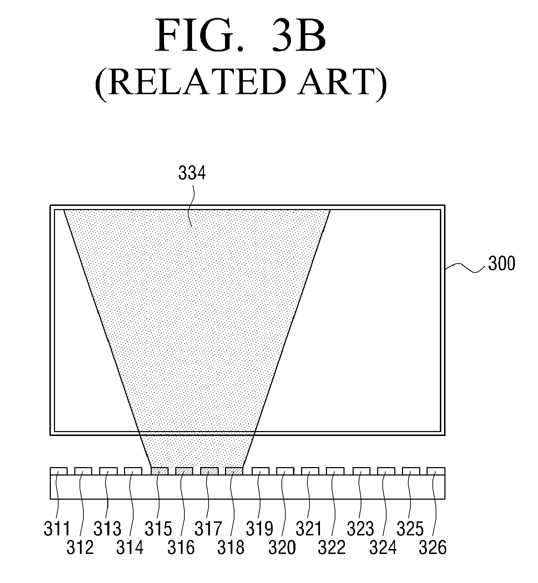

The BLU 270 includes a light guide plate and light sources. The light sources are arranged on left and right sides or upper and lower sides of the light guide plate and emit light toward the light guide plate. The BLU 270 will be explained in detail with reference to FIGS. 3A and 3B.

In FIG. 3A, first to fourth light sources 311, 312, 313, 314 are driven as a first block, fifth to eighth light sources 315, 316, 317, 318 are driven as a second block, ninth to twelfth light sources 319, 320, 321, 322 are driven as a third block, and thirteenth to sixteenth sources 323, 324, 325, 326 are driven as a fourth block.

The first block 311, 312, 313, 314 includes a first light guide unit 330, the second block 315, 316, 317, 318 includes a second light guide unit 331, the third block 319, 320, 321, 322 includes a third light guide unit 332, and the fourth block 323, 324, 325, 326 includes a fourth light guide unit 333.

The light guide units 330, 331, 332, 333 limit a path of light emitted from each block. That is, the light guide units 330, 331, 332, 333 adjust the light path so as to allow the light to enter the light guide plate 300 in a specific direction. Accordingly, the light guide units 330, 331, 332, 333 may be made of transparent material through which light can pass.

As shown in FIG. 3A, the light 334 emitted from the second block 315, 316, 317, 318 enters the light guide plate 300 after being diffused through the transparent light guide unit 331. Accordingly, local dimming of the areas of the display panel not lit by the backlight can be achieved effectively.

Although the light guide units 330, 331, 332, 333 are formed in a rectangular shape in FIG. 3A, they may be formed in a spherical shape or an aspheric shape.

The light sources may be light emitting diodes (LEDs). However, any light source may be used if it can be applied to a general backlight unit.

FIG. 3B is a related art illustration of a backlight unit which illustrates a problem which occurs if the light guide units 330, 331, 332, 333 shown in FIG. 3A do not exist. In this case, when the second block 314, 316, 317, 318 is turned on, the light 334 does not enter the light guide plate 300 in a direction perpendicular to the side wall of the light guide plate, and is instead diffused outward into the other areas of the light guide plate due to the absence of a light guide unit. Accordingly, in a BLU without light guide units, it is difficult to project the light onto only a part of the light guide plate 300, and it is therefore difficult to apply a local dimming method for providing backlight to only some portion of a display apparatus.

Although the light sources 311-326 are arranged on one side of the light guide plate 300 in the above exemplary embodiment of FIG. 3A, they may be arranged on opposite sides, that is on the upper and lower sides or the left and right sides of the light guide plate 300.

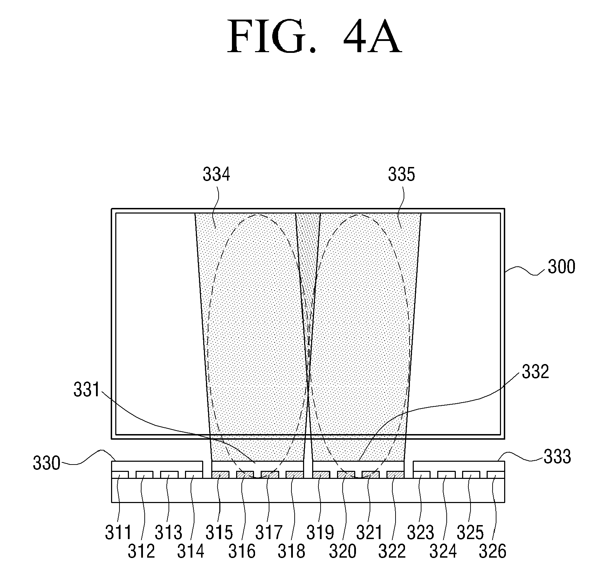

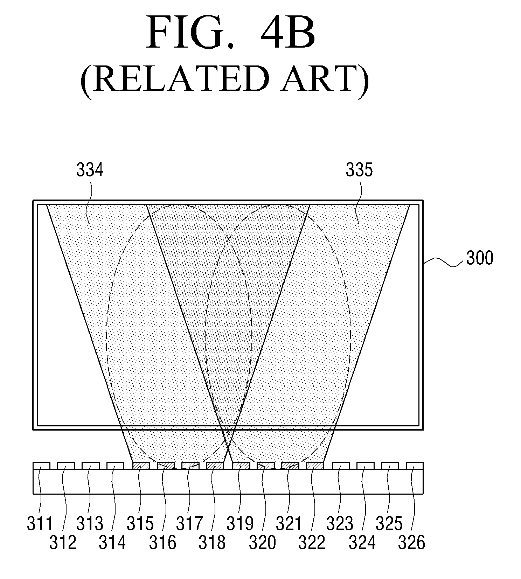

FIGS. 4A and 4B are illustrations of backlight units where two blocks are turned on.

As described above, if the light guide units 330, 331, 332, 333 exist, as shown in the exemplary embodiment of FIG. 4A, paths of light 334 and 335 entering the light guide plate 300 are limited such that the light enters the light guide plate 300 in the direction perpendicular to the side wall of the light guide plate 300 and in a narrow path, and thus inter-block interference is reduced. Accordingly, the light can be projected onto the light guide plate 300 on a block-specific basis.

That is, the light emitted from the second block 315, 316, 317, 318 and the light emitted from the third block 319, 320, 321, 322 enter the light guide plate in the direction perpendicular to the side wall of the light guide plate, and diffusion of light outward, or in a direction parallel to the side wall, is reduced. Thus, inter-block interference is reduced and the light can be projected onto only a specific block of the light guide plate 300.

However, if the light guide units 330, 331, 332, 333 do not exist, as shown in the related art illustration in FIG. 4B, inter-block interference is serious due to diffusion of light paths 334 and 335 from one block outward into other areas of the light guide plate 300. It is therefore difficult to project the light onto the light guide plate 300 on a block-specific basis, and thus efficiency of the local dimming method deteriorates.

More specifically, in FIG. 4B, the light paths 334 and 335 emitted from the second block 315, 316, 317, 318 and the third block 319, 320, 321, 322, respectively, are diffused over the entire area of the light guide plate 300 when entering the light guide plate 300. Accordingly, the light emitted from the second block 315, 316, 317, 318 and the light emitted from the third block 319, 320, 321, 322 interfere with each other and the amount of light entering the light guide plate 300 is not uniform.

Although 16 light sources are arranged on one side of the light guide plate 300 in the above exemplary embodiments and related art examples, this configuration is merely an example for convenience of explanation. More light sources may be arranged as needed. Also, although four light sources make up one group in the above exemplary embodiments and related art examples, more or fewer light sources may make up one group.

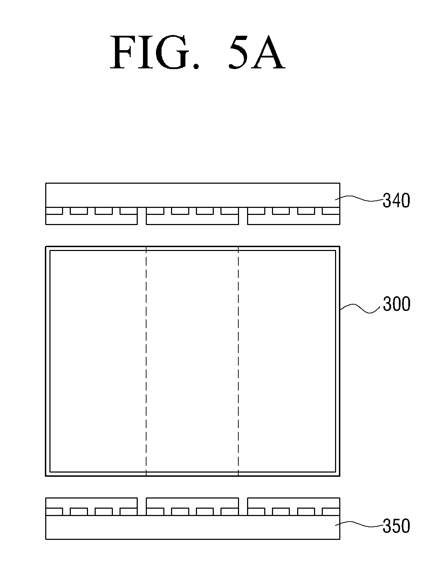

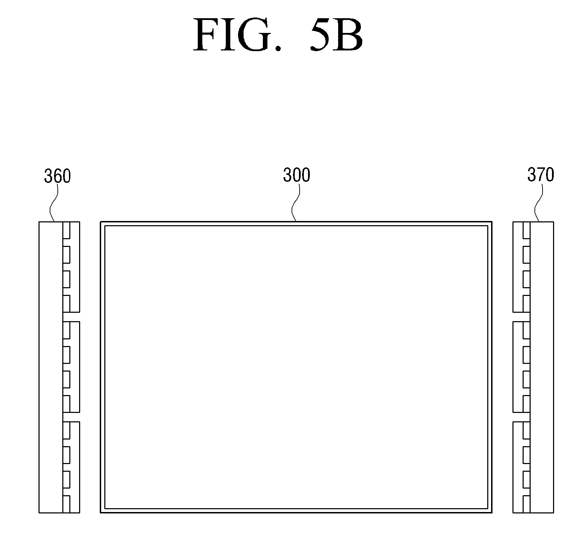

Although the light sources are arranged on the lower side of the light guide plate 300 in the above exemplary embodiments and related art examples, this configuration is merely an example for the convenience of explanation. The light sources may be arranged on upper and lower sides of the light guide plate 300 or left and right sides of the light guide plate 300, as illustrated in FIGS. 5A and 5B.

FIG. 5A illustrates a BLU with light sources 340 arranged on the upper side of the light guide plate 300 to emit light toward the light guide plate 300, as well as light sources 350 arranged on the lower side of the light guide plate 300 to emit light toward the light guide plate 300.

FIG. 5B illustrates a BLU with light sources 360 arranged on the left side of the light guide plate 300 to emit light toward the light guide plate 300, as well as light sources 370 arranged on the right side of the light guide plate 300 to emit light toward the light guide plate 300.

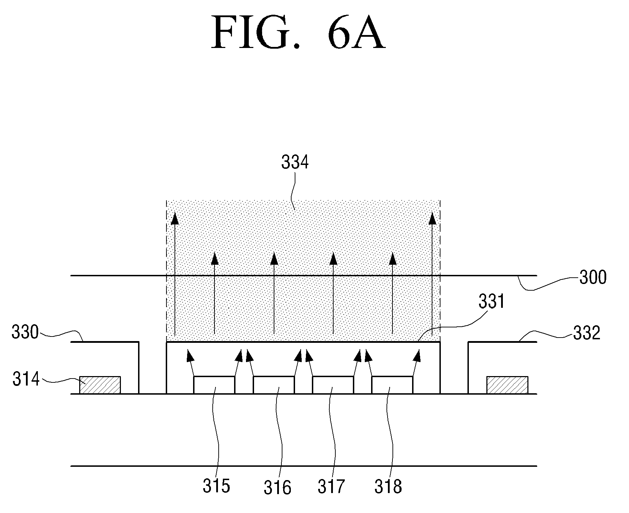

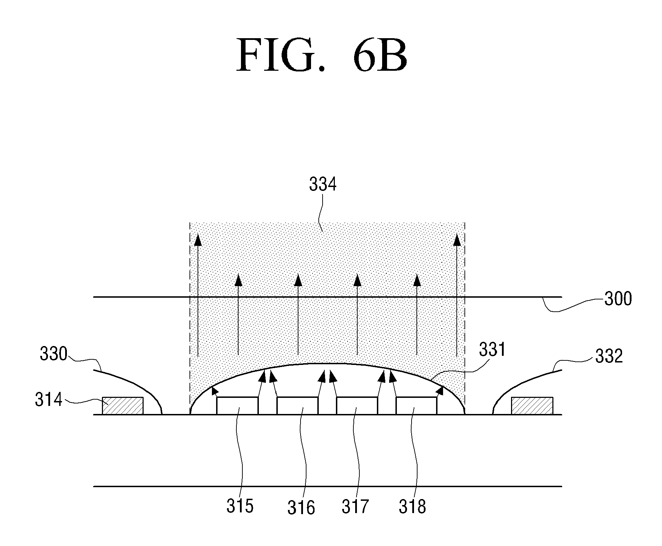

FIGS. 6A and 6B illustrate a path of light 334 entering a light guide plate 300 from a light source 315, 316, 317, 318 in a backlight unit, according to an exemplary embodiment.

FIG. 6A is an enlarged view of FIG. 3A. When the light emitted from the turned-on block 315,316,317,318 passes through the light guide unit 331, the light guide unit 331 limits the path of the light 334 such that the light enters the light guide plate 300 in a direction perpendicular to the side wall of the light guide plate 300. In one exemplary embodiment, the light guide unit 331 of FIG. 6A is made of transparent material and is formed in a rectangular shape such that the light guide unit 331 encloses the light sources 315,316,317,318 of the block.

FIG. 6B also illustrates a BLU with a path of light 334 that enters the light guide plate 300 in the perpendicular direction due to the existence of the light guide unit 331. However, unlike in FIG. 6A, the light guide unit 331 in FIG. 6B has an aspheric shape.

When the light emitted from the light sources 315, 316, 317, 318 of the block passes through the light guide unit 331 of the aspheric shape, the path of the light 334 is limited. Accordingly, the light enters the light guide plate 300 in the direction perpendicular to the side wall of the light guide plate 300.

Although the light guide unit 331 includes the four light sources in the above explanation, this should not be considered as limiting. More light sources or fewer light sources may be included in the light guide unit 331.

The display apparatus and the backlight unit according to the above exemplary embodiment is capable of achieving local dimming effectively, and more particularly, is capable of reducing inter-block interference and increasing directivity of light, thereby providing effective backlight.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims. Many alternatives, modifications, and variations will be apparent to those skilled in the art.

## Claims

1. A display apparatus comprising:
a display panel; and
a backlight unit which provides backlight to the display panel,
wherein the backlight unit comprises:
a light guide plate;
a plurality of light sources which project light onto a side surface of the light guide plate; and
a light guide unit which is provided in each of at least two groups into which the plurality of light sources are classified,
wherein the light guide unit is disposed toward the light guide plate in order to limit a path of the light projected onto the side surface of the light guide plate.

2. The display apparatus as claimed in claim 1, wherein the light guide unit is disposed toward the light guide plate such that the light projected onto the side surface of the light guide plate has increased directivity.

3. The display apparatus as claimed in claim 1, wherein the light guide unit comprises a transparent material.

4. The display apparatus as claimed in claim 3, wherein the light guide unit is formed in a spherical shape or aspheric shape.

5. The display apparatus as claimed in claim 3, wherein the light guide unit is formed in a rectangular shape such that the light guide unit encloses all of the light sources of the group upon which the light guide unit is disposed.

6. The display apparatus as claimed in claim 1, wherein each of the groups comprises at least two light sources.

7. The display apparatus as claimed in claim 1, wherein the light source is a light emitting diode (LED).

8. The display apparatus as claimed in claim 1, wherein the plurality of light sources project light onto a left side surface and a right side surface of the light guide plate.

9. The display apparatus as claimed in claim 1, wherein the plurality of light sources project light onto an upper side surface and a lower side surface of the light guide plate.

10. The display apparatus as claimed in claim 1, further comprising a driving unit which controls which of the plurality of light sources are turned on or off,
wherein the driving unit controls the light sources to be turned on or off by group.

11. A backlight unit, comprising:
a light guide plate;
a plurality of light sources which project light onto a side surface of the light guide plate; and
a light guide unit which is provided in each of at least two groups into which the plurality of light sources are classified,
wherein the light guide unit is disposed toward the light guide plate in order to limit a path of the light projected onto the side surface of the light guide plate.

12. The backlight unit as claimed in claim 11, wherein the light guide unit is disposed toward the light guide plate such that the light projected onto the side surface of the light guide plate has increased directivity.

13. The backlight unit as claimed in claim 11, wherein the light guide unit comprises a transparent material.

14. The backlight unit as claimed in claim 11, wherein each of the groups comprises at least two light sources.

15. The backlight unit as claimed in claim 11, wherein the light source is an LED.
